# FASCICULE DE BREVET EUROPEEN

(11) **EP 2 474 676 B1**
(45) Date de publication et mention de la délivrance du brevet: **08.03.2017**
(21) Numéro de dépôt: 12305026.2
(22) Date de dépôt: 09.01.2012
(51) Int. Cl.: E04B 1/90

(54) **Isolant thermique et phonique à partir de matières textiles recyclées**
Wärme- und Schalldämmelement aus Recycling-Textilien
Heat and sound insulator made of recycled textile materials

(30) Priorité: 11.01.2011 FR 1150204
(43) Date de publication de la demande: 11.07.2012
(73) Titulaire: Blanchisserie Industrielle du Centre, 42400 Saint-Chamond (FR)
(72) Inventeur: Kekayas, Michel, 42400 Saint Chamond (FR)
(74) Mandataire: Cabinet Laurent & Charras

(56) Documents cités:
- WO-A1-01/48330
- DE-U1- 29 605 878
- FR-A1- 2 777 576

## Description

L'invention se rattache au secteur technique des produits isolants utilisés dans la construction et le bâtiment et aussi de la technologie du recyclage des produits textiles.

Il est notoirement connu de réaliser des isolants thermiques et phoniques à partir de laines minérales telle que laine de verre. Ces produits comprennent une structure 'multicouches' ou sont intégrés dans des enveloppes ou poches de protection. Ainsi la laine de verre se présente dans une épaisseur de plusieurs centimètres en étant insérée entre des feuilles, films, enveloppes, plaques faisant office de parois pour assurer d'une part la rigidité du ou des panneaux obtenus et aussi d'avoir une certaine protection de cette laine de verre qui s'effrite très facilement lors des manipulations de transport, de pose ou de dépose.

Ce type d'isolant à partir de laine de verre présente néanmoins de nombreux inconvénients. Le premier est lié à la nature même de la matière constitutive de l'isolant avec un effritement facile et rapide, avec une déchirabilité de l'enveloppe de protection, en particulier lors de la dépose de l'isolant, un contact au toucher désagréable La laine de verre, au contact avec la peau, est source d'irritations fortes gênantes et durables. Le port de lunette de protection est aussi requis lorsque la pose s'effectue au plafond pour éviter la projection de laine de verre dans les yeux.

Un autre inconvénient est celui du coût de la production de cette laine de verre, engendrant une consommation d'énergie très conséquente. Par ailleurs, son rendement d'isolation thermique diminue lorsque le taux d'humidité lié à l'environnement de pose augmente.

Les contraintes sont largement connues des professionnels et du public.

On connaît aussi la conception d'isolants réalisés à partir de plastiques alvéolaires du type polystyrène expansé, polystyrène extrudé, polyuréthane. Ces isolants sont également largement développés sur les marchés, mais ils ont un grave inconvénient lié à leur inflammabilité.

On connaît aussi la conception d'isolants réalisés de matériaux textiles recyclés à partir des textiles usagés qui ont subi des opérations d'effilochage et/ou de broyage pour permettre la séparation des fibres d'avec des composants inappropriés du type boutons, épingles, fermetures à glissière ou autres.

Cette technologie de recyclage des textiles a fait l'objet de nombreux brevets, tels que par exemple FR 2 777 576 - FR 2 733 517 - FR 2 498 636 - FR 2 283 247 - FR 2 725 458 - FR 2 621 329 - FR 2 619 829. Après effilochage, les fibres textiles sont combinées à des liants pour assurer une certaine tenue, et ce, par une opération de chauffage du type thermo-fusion, thermo-liage ou autres.

En pratique, ce type d'isolant, à partir de matière textile recyclée, est peu développée sur le marché car il présente de nombreux inconvénients.

Le Demandeur a du reste lui-même envisagé dans le passé à l'exécution d'isolant de ce type, mais les inconvénients ci-après exposés se sont révélés importants par rapport aux contraintes du marché et des exigences techniques liées à l'isolation thermique ou phonique.

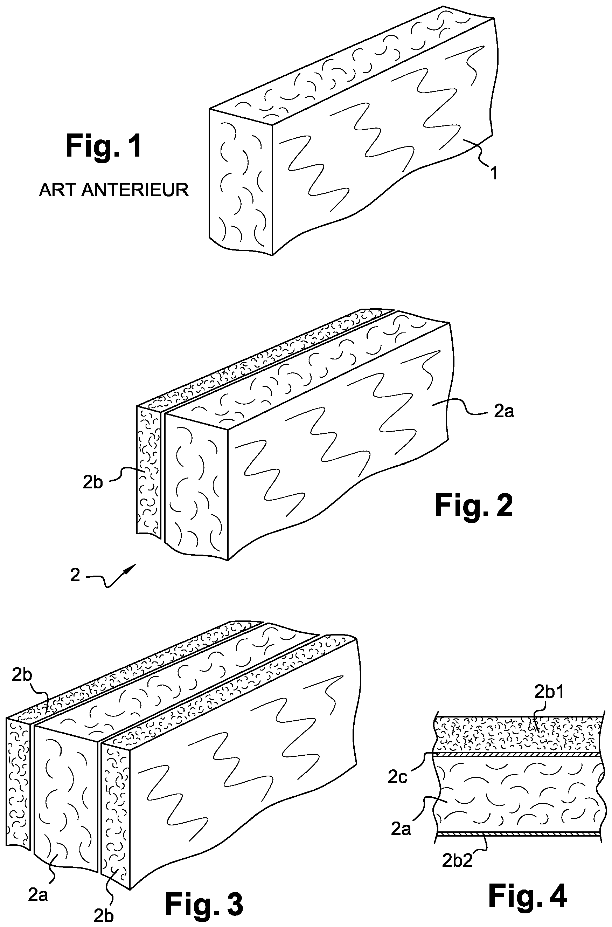

On a représenté figure 1 l'isolant selon l'Art Antérieur, de par la nature constitutive de l'isolant, à savoir des fibres textiles recyclées, l'isolant se présente sous la forme d'un bloc (1) compact comprenant beaucoup de matière textile avec une densité importante pour assurer une tenue mécanique. Cela nécessite entre autres des efforts importants de compactage avec des forces de poussée élevées par des machines de mise en oeuvre.

Un autre inconvénient résidait dans la difficulté de découper des panneaux selon des formes appropriées de par la structure matière à haute densité dans un bloc compact unitaire.

Un autre inconvénient résidait dans la faiblesse des performances thermiques et phoniques.

Un autre inconvénient résidait dans la qualité très variable des blocs isolants obtenus car les déchets textiles recyclés pouvaient être de même nature ou être différents en caractéristiques et ainsi faire apparaître des différenciations de caractéristiques d'une zone à une autre sur un même panneau.

Un autre inconvénient réside dans le poids des panneaux d'isolants du à la forte densité requise de l'ensemble compact obtenu selon le procédé précité, ce qui entraîne des difficultés de transports et de manipulations.

L'ensemble de ces inconvénients ont ainsi nuit au développement de ce type d'isolant.

Ainsi, selon les données du marché, la première catégorie d'isolant est de manière principale et conséquente celle des isolants à base de laine de verre à concurrence de 65 % du marché, puis celui à base de plastique alvéolaires à concurrence de 29 % et enfin de celui des autres matériaux dont les produits textiles recyclés pour 6 %.

Actuellement, différentes orientations sont développées à travers les pays les plus avancés pour tenir compte de l'environnement et de la maîtrise des consommations d'énergie.

La problématique liée aux déchets est omniprésente avec en France par exemple "Le Grenelle de l'Environnement" en 2007. Il est prévu à moyen terme que tous les types de déchets soient recyclés dans des taux beaucoup plus conséquents qu'actuellement.

Ainsi les orientations vont toutes dans le même sens du recyclage, des économies d'énergie et donc à la recherche de produits de substitution à ceux d'aujourd'hui.

La démarche du Demandeur dont l'activité spécifique depuis l'origine est la transformation des déchets textiles en produit d'essuyage a été de reconsidérer totalement la problématique des isolants à base de déchets textiles pour concevoir un nouveau produit qui réponde aux exigences thermiques et phoniques du marché, qui obvie aux inconvénients des produits ci-avant rappelés et qui puisse progressivement devenir un produit majeur sur le marché de l'isolation.

Selon une première caractéristique, l'isolant thermique et phonique conçu à partir de déchets textiles recyclés préalablement effilochés ou broyés, est remarquable en ce qu'il est constitué par une structure "multicouches" comprenant une couche centrale expansée constituée de matières textiles naturelles du type coton, lin, laine, pour l'isolation thermique, d'une épaisseur de plusieurs centimètres et peu dense, et d'au moins sur l'une des faces de la dite couche centrale une couche externe compressée textile et synthétique du type polyester, polyamide, d'une épaisseur de quelques millimètres et de grande densité, supérieure à la densité de la couche centrale, pour assurer des fonctions d'isolation phonique, de résistance à l'humidité, de tenue mécanique de protection.

Selon une autre caractéristique, l'isolant à base de matières textiles recyclées comprend une structure "tri-couches" avec une couche centrale expansée, épaisse et peu dense, réalisée à partir de déchets de matières textiles naturelles recyclées, et de part et d'autre de la dite couche centrale, une couche externe compressée peu épaisse et de grande densité supérieure à la densité de la couche centrale, constituée de matières textiles synthétiques recyclées.

Ces caractéristiques et d'autres encore ressortiront bien de la suite de la description.

Pour fixer l'objet de l'invention illustré de manière non limitative aux figures des dessins, où
▪ La figure 1 est une vue en perspective d'un isolant monobloc à base de déchets textiles recyclés selon l'Art Antérieur,
▪ La figure 2 est une vue en perspective d'un isolant selon l'invention dans une configuration bicouches,
▪ La figure 3 est une vue en perspective d'un isolant selon l'invention dans une configuration tricouches.
▪ La figure 4 est une vue à caractère schématique de dessus illustrant une variante de la figure 3.

L'isolant thermique et phonique selon l'invention est référencé dans son ensemble par (2) et est réalisé à partir de déchets textiles recyclés préalablement effilochés et/ou broyés, puis triés selon la nature des matières et fibres naturelles ou synthétiques.

L'isolant (2) est constitué par une structure "multicouches" à deux ou trois couches, avec une couche centrale (2a) épaisse et peu dense, constituées de matières naturelles telles que coton, laine, lin et autres.

Cette couche (2a) présente une épaisseur de plusieurs centimètres définie selon les normes en vigueur.

Sur au moins une de ses faces destinée à être apparente lors de la pose, et plus généralement sur chacune de ses faces, l'isolant présente une ou deux couches externes (2b) de part et d'autre de la couche centrale (2a), figures 2 et 3. Cette ou ces couche(s) externe(s) (2b) sont réalisées à partir de déchets textiles recyclés et spécifiquement de matières synthétiques du type polyester, polyamide et similaires. L'épaisseur de chacune de ces couches externes (2b) est de quelques millimètres avec une très forte densité supérieure à la densité de la couche centrale. Cette ou ces couche(s) externe(s) (2b) remplisse(nt) différentes fonctions, isolation phonique, résistance à l'humidité, tenue mécanique, protection contre les insectes et les rongeurs. La liaison des couches (2a) (2b) s'effectue par compactage et chauffage de manière à obtenir une liaison fibreuse des parties de matières en regard des différentes couches. La couche centrale est expansée, la ou les couche(s) externe(s) sont compressées.

On indique ci-après les valeurs de densité des produits obtenus selon l'Art Antérieur et selon l'invention.
- Produit monocouche selon l'Art Antérieur (1) existant entre 20 et 50 Kg/m3 soit pour un isolant de 10 cm 3 Kg/m2 en moyenne.
- Produit bicouches (2) selon l'invention proposé en 10 cm d'épaisseur :
   - 1 couche centrale expansée de 9 cm à 20 Kg/m3 soit 1,8 Kg/M2
   - 1 couche externe compressée de 1 cm à 120 Kg/m3 soit 1,2 Kg/M2
   - Densité totale : 3 Kg/m2 pour 10 cm.
- Produit tricouches (2) selon l'invention proposée en 10 cm d'épaisseur :
   - 1 couche centrale expansée de 8 cm à 20 Kg/m3 soit 1,6 Kg/m2
   - 2 couches externes compressées de 2x1 cm à 120 Kg/m3 soit 2,4 Kg/m2
   - Densité totale : 4 Kg/m2 pour 10 cm

On indique ci-après quelques données d'épaisseur de produits bicouches ou tricouches selon l'invention pour des épaisseurs globales données de 50mm, 100mm ; 120mm.

| EPAISSEUR GLOBALE | 50 | 100 | 120 |
|---|---|---|---|
| 1) Produit bicouches | | | |
| Couche centrale | 40 mm | 90 à 80mm | 110 à 100 mm |
| Couche externe | 10 mm | 10 à 20 mm | 10 à 20 mm |
| 2) Produit tricouches | | | |
| Couche externe | 5 mm | 10 mm | 10 mm |
| Couche centrale | 40 mm | 80 mm | 100 mm |
| Couche externe | 5 mm | 10 mm | 10 mm |
| 3) Produit tricouches incluant un film barriere phonique | | | |
| Couche externe (2b1) | 9 mm | 19mm | 19 mm |
| Couche centrale (2a) | 40 mm | 80 mm | 100 mm |
| Couche externe (2b2) | 1 mm | 1 mm | 1 mm |

Le cas identifié 3 pour le produit tricouches incluant un film barrière est représenté figure 4. Dans ce cas, les deux couches externes (2b) ont des épaisseurs différentes, et on a identifié lesdites couches par (2b1) et (2b2). Ce film barrière phonique est référencé par (2c) et est réalisé en un matériau non tissé et il est disposé comme représenté entre la couche centrale (2a) et la couche externe (2b1) dont l'épaisseur et supérieure à l'épaisseur de la couche externe (2b2).

Une autre application de l'invention vise un isolant bicouches (2) défini selon les modalités précitées et qui est susceptible d'inclure un voile en fibre aramide de 3 mm issu de vêtement de pompiers et déchets aramide non tissé assurant une protection anti-feu supplémentaire. Cette fibre aramide est disposée côté couche centrale expansée (2a) située côté intérieur dans la construction. Cette application est particulièrement intéressante car à la connaissance du Demandeur les vêtements de pompiers qui sont constitués à partir de fibre aramide ne sont actuellement pas recyclés. Dans le cadre de la présente invention, les vêtements sont broyés et les déchets sont conformés pour constituer un voile en fibre aramide.

Le produit final obtenu offre de nombreux avantages. Il permet d'avoir un isolant répondant parfaitement aux contraintes thermiques et phoniques requises. De par la variation de densité de ces couches constitutives, il est plus facile à porter, à déplacer et à poser.

L'isolant selon l'invention, de par sa structure "multicouches" devient respirant car sa couche centrale est plus aérée car peu dense et offre ainsi une meilleure qualité d'isolation thermique.

Cet isolant, produit en panneau ou en rouleau, est facile à découper. Il est sans danger ou nuisance pour la manipulation et ne nécessite par ailleurs aucun moyen supplémentaire de protection.

## Revendications

1. Isolant thermique et phonique conçu à partir de déchets textiles recyclés préalablement effilochés ou broyés, est **caractérisé en ce qu'**il est constitué par une structure "multicouches" comprenant une couche centrale expansée (2a) constituée de matières textiles naturelles du type coton, lin, laine, pour l'isolation thermique, d'une épaisseur de plusieurs centimètres et peu dense, et d'au moins sur l'une des faces de la dite couche centrale une couche externe compressée (2b) textile synthétique du type polyester, polyamide, d'une épaisseur de quelques millimètres et, de plus grande densité pour assurer des fonctions d'isolation phonique, de résistance à l'humidité, de tenue mécanique de protection.

2. Isolant thermique et phonique à base de matières textiles recyclées selon la revendication 1, **caractérisé en ce qu'**il comprend une structure "tri-couches" avec ladite couche centrale expansée (2a), et de part et d'autre de la dite couche centrale, une couche externe compressée (2b) peu épaisse et de plus grande densité constituée de matières textiles synthétiques recyclées, du type polyester, polyamide.

3. Isolant thermique et phonique à base de matières textiles recyclées selon la revendication 1, **caractérisé en ce qu'**il comprend dans la structure bicouches un voile en fibre aramide de 3 mm issu de vêtements de pompiers et déchets aramides non tissés.

4. Isolant thermique et phonique selon la revendication 2, **caractérisé en ce que** la structure « tricouches » inclut un film barrière phonique (2c) réalisé en un matériau non tissé, et ce que ladite structure comprend des couches externes (2b1 - 2b2) d'épaisseur différenciée, et **en ce que** le film barrière phonique (2c) est disposé entre la couche centrale (2a) et la couche externe (2bl) dont l'épaisseur est supérieure à l'épaisseur de la couche externe (2b2).

## Patentansprüche

1. Wärme- und Schalldämmung, die aus recycelten, zuvor zerfaserten oder zerkleinerten Alttextilien konzipiert ist, **dadurch gekennzeichnet, dass** sie aus einer "mehrschichtigen" Struktur aufgebaut ist, umfassend eine aufgeblähte mittlere Schicht (2a) bestehend aus Naturtextilien vom Typ Baumwolle, Leinen, Wolle, zur Wärmeisolierung, mit einer Dicke von mehreren Zentimetern und geringerer Dichte und mit mindestens auf einer der Flächen der mittleren Schicht einer komprimierten synthetischen Textilschicht (2b) vom Typ Polyester, Polyamide, mit einer Dicke von einigen Millimetern und höherer Dichte zur Sicherstellung von Schalldämmungs-, Feuchtigkeitsbeständigkeits-, mechanischen Schutzfunktionen.

2. Wärme- und Schalldämmung auf der Basis von recycelten Textilien nach Anspruch 1, **dadurch gekennzeichnet, dass** sie eine "dreischichtige" Struktur mit aufgeblähter mittlerer Schicht (2a) und beidseitig von der mittleren Schicht einer komprimierten äußeren Schicht (2b) mit geringerer Dicke und höherer Dichte bestehend aus synthetischen recycelten Textilien vom Typ Polyester, Polyamide umfasst.

3. Wärme- und Schalldämmung auf der Basis von recycelten Textilien nach Anspruch 1, **dadurch gekennzeichnet, dass** sie in der zweischichtigen Struktur ein Tuch aus Aramidfasern von 3 mm umfasst, das aus Feuerwehrschutzbekleidung und Aramidvliesen stammt.

4. Wärme- und Schalldämmung nach Anspruch 2, **dadurch gekennzeichnet, dass** die "dreischichtige" Struktur eine Schalldämmfolie (2c) umfasst, die aus einem Vliesmaterial hergestellt ist, und dadurch, dass die Struktur äußere Schichten (2b1 - 2b2) von unterschiedlicher Dicke umfasst, und dadurch, dass die Schalldämmfolie (2c) zwischen der mittleren Schicht (2a) und der äußeren Schicht (2b1), deren Dicke größer ist als die Dicke der äußeren Schicht (2b2), angeordnet ist.

## Claims

1. A heat and sound insulator made from recycled textile waste previously frayed or shredded, **characterized in that** it is constituted by a "multilayered" structure comprising an expanded central layer (2a) made of natural textile materials of the cotton, linen or wool type, for the heat insulation, with a thickness of several centimeters and sparse, and on one of the faces of said central layer, by at least one outer compressed synthetic textile layer (2b) of the polyester or polyamide type, with a thickness of a few millimeters and with a higher density to fulfil sound insulation, moisture resistance and protective mechanical strength functions.

2. The heat and sound insulator based on recycled textile materials according to claim 1, **characterized in that** it comprises a "three-layer" structure with said expanded central layer (2a) and on either side of said central layer, an outer compressed layer (2b) thin and with higher density consisting of recycled synthetic textile materials of the polyester, polyamide type.

3. The heat and sound insulator based on recycled textile materials according to claim 1, **characterized in that** it comprises in the bilayer structure a aramid fiber fleece with a thickness of 3 mm obtained from firefighter garments and non-woven aramid waste.

4. The heat and sound insulator according to claim 2, **characterized in that** the "three-layer" structure includes a sound barrier film (2c) made of a nonwoven material, and **in that** said structure comprises outer layers (2b1-2b2) with differential thickness, and **in that** the sound barrier film (2c) is disposed between the central layer (2a) and the outer layer (2b1), the thickness of which is greater than the thickness of the outer layer (2b2).
